# EUROPÄISCHE PATENTSCHRIFT

(11) **EP 3 398 729 B1**
(45) Veröffentlichungstag und Bekanntmachung des Hinweises auf die Patenterteilung: **11.09.2024**
(21) Anmeldenummer: 18169685.7
(22) Anmeldetag: 27.04.2018
(51) Int. Cl.: B25J 5/00, B65G 1/137

(54) **EINRICHTUNG, VORRICHTUNG UND VERFAHREN ZUM BETRIEB VON AUTONOMEN, MIT KLEINLADUNGSTRÄGERN BELADBAREN TRANSPORTFAHRZEUGEN**
FACILITY, DEVICE AND METHOD FOR OPERATING AUTONOMOUS TRANSPORT VEHICLES WHICH CAN BE LOADED WITH SMALL GOODS HOLDERS
DISPOSITIF, APPAREIL ET PROCÉDÉ DE FONCTIONNEMENT DE VÉHICULES DE TRANSPORT AUTONOMES, POUVANT ÊTRE CHARGÉS AU MOYEN DES PETITS PORTEURS DE CHARGE

(30) Priorität: 05.05.2017 DE 102017207555
(43) Veröffentlichungstag der Anmeldung: 07.11.2018
(73) Patentinhaber: Robert Bosch GmbH, 70442 Stuttgart (DE)
(72) Erfinder: Knoll, Christian, 70376 Stuttgart (DE)

(56) Entgegenhaltungen:
- EP-A1- 2 899 496
- US-A1- 2010 217 436
- US-A1- 2015 073 589
- US-A1- 2015 115 876
- US-A1- 2016 132 059
- US-A1- 2016 325 432

## Beschreibung

Die Erfindung betrifft eine Einrichtung, eine Vorrichtung und ein Verfahren zum Betreiben von automatisiert bzw. autonom agierenden, mit Transportgut, z.B. mit sogenannten Kleinladungsträgern, beladbaren Transportfahrzeugen, sowie zum Betreiben von aus solchen Transportfahrzeugen gebildeten Fahrzeugflotten bzw. Routenzügen, gemäß den Oberbegriffen der jeweiligen unabhängigen Ansprüche. Gegenstand der vorliegenden Erfindung sind auch ein Computerprogramm, ein maschinenlesbarer Datenträger zur Speicherung des Computerprogramms und ein elektronisches Steuergerät, mittels derer das erfindungsgemäße Verfahren durchführbar ist.

### Stand der Technik

In Produktionsstätten insbesondere von Automobilherstellern oder Maschinenbauern sowie im Bereich der Lagerhaltung bzw. Lagerlogistik bei Großhändlern, Supermärkten oder dergleichen werden vielfach Transportfahrzeuge mit Kleinladungsträgern bzw. Kleinlastträgern (KLT) eingesetzt, um Bauteile oder Waren zu verschiedenen Produktionsstationen oder Lagerstandorten hin transportieren zu können. Die einzelnen Kleinladungsträger können dabei bis zu 25 Kilogramm schwer sein. Vielfach werden auch sogenannte "Routenzüge" zum Transportieren der Kleinladungsträger eingesetzt. Insbesondere die Beladung derartiger Routenzüge erfolgt dabei manuell, was entsprechend personalintensiv ist.

In der US 2015/073589 A1 sind verschiedene Varianten von autonomen mobi-len Robotereinheiten beschrieben, die mit Behältern oder Roboterarmen zum Aufgreifen von Artikeln aus den Behältern ausgestattet sind. Die beiden Varianten von Robotereinheiten können miteinander gekoppelt werden, so dass eine kombinierte Einheit mit Arm und Behältern entsteht.

Die US 2016/132059A1 offenbart Manipulatorvorrichtungen, die entweder als autonom fahrbare Roboter oder als feststehender Roboterarm ausgebildet sind und so zur Manipulation von durch Roboterfahrzeuge transportierten Waren dienen.

Weiter gehen aus der DE 10 2015 002 469 A1 ein Verfahren und ein Robotermodul zum Handhaben von Kleinladungsträgern hervor, wobei das Robotermodul an einem Auslagerungstisch eines Teilelagers fest angeordnet ist und wobei auf dem Auslagerungstisch mehrere der Kleinladungsträger angeordnet sind. Das Robotermodul wird mittels einer Hubanordnung zunächst in eine erste Stellung bzw. Position gebracht, in welcher die Hubanordnung auf die gleiche Höhe wie die Höhe des Auslagerungstisches eingestellt ist. Mittels eines an dem Roboter vorgesehenen Greifers wird ein Kleinladungsträger ergriffen und von dem Auslagerungstisch heruntergezogen. Die Hubanordnung wird danach in eine zweite Stellung gebracht, in welcher die Hubanordnung auf die gleiche Höhe wie eine der Aufnahmeflächen eines bevorzugt mehrere RoutenzugAnhänger aufweisenden Routenzugs eingestellt ist. Der genannte Kleinladungsträger wird mittels des Greifers auf eine der Aufnahmeflächen eines Routenzugs verschoben.

Durch das Verfahren des Robotermoduls entlang der Auslagerungstische wird eine automatische Beladung eines gesamten Routenzugs mit Kleinladungsträgern ermöglicht. Mittels eines mit einer Steuerung des Roboters gekoppelten Kamerasystems werden an dem Routenzug angeordnete Referenzmarkierungen erfasst und basierend darauf der Roboter vor dem Aufschieben des Kleinladungsträgers auf die Aufnahmefläche relativ zum Routenzug positioniert, d.h. der Roboter misst sich mittels eines in die Robotersteuerung integrierten Visionsystems relativ zum Routenzug ein, wozu auch an jedem RoutenzugAnhänger Referenzmarkierungen angebracht sind. Dadurch können eine besonders präzise Positionierung des Robotermoduls bezüglich des Routenzugs und somit eine präzise Beladung des Routenzugs mit den Kleinladungsträgern realisiert werden. Zudem lässt sich dadurch die Packungsdichte der Kleinladungsträger auf dem Routenzug erhöhen.

### Offenbarung der Erfindung

Die Erfindung betrifft insbesondere als sog. "Automatic guided vehicles" (AGV) ausgebildete, mit Transportgut, z.B. mit Kleinladungs- bzw. Kleinlastträgern (KLTs), Kisten, Paletten, Waschrahmen, Blechen oder ähnlichen Transportbehältern beladbare bzw. bestückbare Transportfahrzeuge. Solche batteriebetriebenen und damit autonom agierenden Transportfahrzeuge werden bevorzugt zu Routenzügen zusammengestellt.

Gemäß dem Stand der Technik werden diese Transportfahrzeuge bzw. die entsprechenden Routenzüge entweder von Bedienpersonal manuell betrieben, d.h. das Beladen und Entladen von KLTs sowie das Verfahren der Transportfahrzeuge (AGVs) erfolgen meist rein manuell und nicht automatisiert. In Fällen eines bereits automatisierten Betriebs solcher Transportfahrzeuge bzw. entsprechender Routenzüge sind diese mit einem an einem Transportfahrzeug fest angeordneten Manipulator ausgestattet, mittels dessen die KLTs automatisch gehandhabt werden können.

Gegenüber dem Stand der Technik ist ein erfindungsgemäß modifiziertes, als RoutenzugAnhänger bzw. Routenzug-Wagen vorgesehenes AGV insbesondere so ausgebildet, dass es automatisierbar mit einer mobilen Manipulator- bzw. Handhabungsplattform verbindbar ist und dadurch automatisch von dem AGV aufgeladen werden kann. Dadurch kann eine Manipulatorplattform, nachfolgend bezeichnet als Manipulatorvorrichtung, von einem jeweiligen AGV nur vorübergehend mitgeführt werden. Mittels der Manipulatorvorrichtung kann ein genanntes Transportgut einer Manipulation unterzogen werden. Eine entsprechende, z.B. mit Greifern ausgestattete Manipulatorvorrichtung kann somit von dem jeweiligen AGV, je nach einem vorgebbaren Manipulationsbedarf oder je nach aktuell zu handhabender bzw. zu verarbeitender KLTs, automatisch ausgewechselt werden und als robotischer Manipulator flexibel eingesetzt werden.

Diese flexible Auswechselbarkeit einer Manipulatorvorrichtung hat den Vorteil, dass gegenüber dem Stand der Technik, bei dem die sehr kostspieligen und relativ schweren Manipulatoren an einem AGV fest angeordnet sind, nicht während der gesamten Betriebsdauer eines AGV nutzlos mit transportiert werden müssen, wodurch insbesondere erhebliche Batterieenergie bzw. Batterieleistung verschwendet wird.

Darüber hinaus muss nur eine relativ geringe Anzahl an mobilen Manipulatorvorrichtungen vorgehalten werden, wobei diese Vorrichtungen sogar keine eigenen Antriebs- und/oder Navigationsmittel benötigen.

Bei einem hier betroffenen AGV kann die Auswechslung einer Manipulatorvorrichtung mittels einer an dem AGV angeordneten, mechanischen Aufnahmevorrichtung, z.B. mittels eines Transportaufnehmers bzw. einer Transportstütze, erfolgen. Mittels einer solchen Aufnahmevorrichtung kann die Manipulatorvorrichtung vorübergehend (sozusagen "huckepack") auf das AGV aufgeladen und von diesem zu einem aktuellen bzw. nachfolgenden Arbeitsplatz mitgenommen werden.

Bei einem hier betroffenen AGV kann das Auswechseln einer Manipulatorvorrichtung auch mittels einer dynamischen Kopplung (bzw. "Andocken") erfolgen. Dadurch kann das AGV schnell und sicher an eine jeweilige mobile Manipulatorvorrichtung an- und abgekoppelt werden, um die Manipulatorvorrichtung durch das AGV zu dem aktuellen Arbeitsplatz verbringen zu können. Die schnelle An- bzw. Abkopplung kann mittels einer an sich bekannten Magnetkupplung, ektromechanischen Kupplung oder dergleichen realisiert werden, welche mit einer Multisensorausrüstung ausgestatteten 3D-Positionserkennung zusammenarbeitet. Die 3D-Positionserkennung ermöglicht es, die (räumliche) 3D-Position eines sich nähernden AGVs sicher zu erkennen und die Bewegung des AGV bei der dynamischen Kopplung präzise zu steuern.

Anhand von an der jeweiligen Manipulatorvorrichtung und/oder an dem AGV angeordneten (Referenz-) Markierungen sowie einer an dem AGV oder an der Manipulatorvorrichtung angeordneten, 3D-fähigen Kamera lässt sich der jeweilige Manipulator einer Manipulatorvorrichtung zu einem auf dem KLT-Stapel jeweils oben angeordneten KLT hinführen. Zudem lässt sich eine genannte dynamische Kopplung zwischen einem AGV und einer Manipulatorvorrichtung präzise steuern. Durch diese rein visuelle Steuerung (sog. aus der Robotik bekanntes "visual servoing") kann dieser KLT von dem Manipulator sicher aufgenommen werden, ohne dass es einer vorherigen Kalibrierung bedarf, welche zudem sehr präzise Positionen des Manipulators erfordern würde. Dadurch kann die vorgeschlagene Vorrichtung mittels Linear- und Rotationsachssystemen, welche insbesondere keinen Positionskodierer und/oder eine kabelbasierte Robotik erfordern, sehr kostengünstig realisiert werden. Darüber hinaus wird ermöglicht, bei der Handhabung von KLTs in erheblich vereinfachter Weise die Beladung bzw. Entladung eines Routenzugs mit Kleinladungsträgern zu bewerkstelligen.

Mittels der genannten Kamera werden bevorzugt räumliche Lage- bzw. Positionsdaten erfasst, wobei die Bewegung bzw. Bewegungssteuerung des Manipulators bevorzugt auf den sechs Rotations- und Translationsfreiheitsgraden beruht. Dadurch werden sehr realistische Bewegungsabläufe des Manipulators ermöglicht. Eine solche mehrachsige Bewegung kann mittels aus der industriellen Robotik an sich bekannter, sechsachsiger hydraulischer Antriebe bzw. Manipulatoren realisiert werden.

Die genannten Markierungen können als drei optisch wirksame Markierungen ausgebildet sein, welche bevorzugt aus einem für Lichtstrahlen reflektionsfähigen Material gebildet sind. Solche Markierungen lassen sich z.B. bei einem als Greifer ausgebildeten Manipulator, d.h. bei einem gabelförmigen, mit Gabelzinken ausgestatteten Greifer, vorteilhaft implementieren.

Die Steuerung eines AGVs beim schnellen Beladen und Entladen von KLTs und/oder beim schnellen Ankoppeln und Abkoppeln von mobilen Manipulatorvorrichtungen kann bei vorhandener 3D-Positionserkennung mittels eines an sich bekannten, kollaborativen "Cloud-Computing"-Ansatzes erfolgen, welcher bevorzugt auf an den AGVs angeordneten, sichtbaren Markierungen beruht. Dadurch können die sehr rechenintensiven Berechnungen bei der 3D-Positionserkennung ausgelagert werden, wodurch die Anforderungen an die Batterieleistung des AGVs, die Baugröße und das Gewicht eines AGVs sowie einer Manipulatorvorrichtung erheblich verringert werden können. Zudem können erforderliche Aktualisierungen ("Updates") eines entsprechend eingerichteten Steuerprogramms vorteilhaft über die Cloud erfolgen.

Die datentechnische Verbindung zwischen einem AGV und einer Cloud erfolgt z.B. in an sich bekannter Weise mittels einer WLAN-Verbindung. Zur Steuerung wird die Position eines heranfahrenden AGVs mittels der 3D-Positionserkennung und der genannten optischen Markierungen präzise erkannt und die räumliche Bewegung des AGVs in Bezug auf einen aktuellen Arbeitsplatz bzw. in Bezug auf aktuell zu verarbeitende KLTs entsprechend gesteuert. Die entsprechenden, aus der Robotik an sich bekannten SLAM-Navigationsdaten ("SLAM" = Simulation Localization and Mapping) werden dabei in der Cloud berechnet bzw. verarbeitet.

Bei dem erfindungsgemäßen Verfahren zur automatischen Steuerung insbesondere der Koppelung eines AGVs bzw. eines wenigstens zwei AGVs aufweisenden Routenzugs mit einer Manipulatorvorrichtung mittels einer genannten Kopplungsvorrichtung ist insbesondere vorgesehen, dass von dem 3D-Kamerasystem und anhand der an dem Transportfahrzeug angeordneten Referenzmarkierungen erfasste visuelle Daten zugrundegelegt werden. Dabei kann vorgesehen sein, dass die Datenverarbeitung der erfassten visuellen Daten an externe Rechenmittel, z.B. an eine genannte Cloud, ausgelagert wird.

Mit dem vorgeschlagenen Verfahren können somit das An- und Abkoppeln eines AGVs an eine mobile, wenigstens zwei Manipulatoren aufweisende Manipulatorvorrichtung automatisch gesteuert werden. Dadurch kann eine erhebliche Kosteneinsparung im Logistikbereich, insbesondere durch den Entfall nicht wertschöpfender Tätigkeiten bei der Routenzugbeladung, erzielt werden. Darüber hinaus kann ein erheblicher Ergonomievorteil erzielt werden, da eine manuelle Handhabung ("Handling") von Kleinladungsträgern (KLTs) entfällt. Zudem kann dadurch erhebliche Arbeitszeit von Bedienpersonal eingespart werden und für eine Lagerhaltung erforderlicher Puffer- bzw. Reserve-Lagerraum zudem erheblich verringert werden.

Ferner kann bei dem vorgeschlagenen Verfahren vorgesehen sein, dass die Steuerung einer hier betroffenen Fahrzeugflotte z.B. mittels Simulationstechnik dahingehend optimiert wird, dass für ein gegebenes Anwendungsszenario die optimale Anzahl an AGVs und/oder mobilen Manipulatorvorrichtungen im Vorfeld berechnet wird. Dadurch können vorteilhaft mehrere Manipulatorvorrichtungen so an verschiedenen Standorten positioniert werden, dass ein AGV nur so gering wie möglich mit einer Manipulatorvorrichtung gekoppelt werden muss, um an vorgebbaren Arbeitsplätzen Manipulatorarbeiten durchzuführen und um insbesondere bei weiträumigen Bewegungen des AGVs nur so selten wie möglich eine Manipulatorvorrichtung mitführen zu müssen.

Die bei der bevorzugt mittels Cloud-Computing berechneten bzw. simulierten Bewegungspfade der AGVs bzw. der entsprechenden, für die Bewegungssteuerung erforderlichen SLAM-Navigationsdaten können dann mittels WLAN in das jeweilige AGV bzw. die Manipulatorvorrichtung heruntergeladen werden. Weiterhin kann vorgesehen sein, dass diese SLAM-Daten, für ein bestimmtes AGV und basierend auf von der 3D-Positionserkennung erfassten KLTs, im laufenden Betrieb dynamisch aktualisiert werden. Dabei kann zudem vorgesehen sein, dass die SLAM-Daten eines AGVs mit entsprechenden SLAM-Daten anderer AGVs verglichen und/oder zusammengeführt werden. Durch einen solchen kollaborativen Ansatz kann die Zuverlässigkeit bzw. die Präzision einer gesamten Fahrzeugflotte erheblich verbessert werden.

Das vorgeschlagene Verfahren und die Einrichtung bzw. Vorrichtung können insbesondere in Produktionsstätten, z.B. in der Automobilproduktion bei der zeitkritischen Zuführung von Bauteilen zu Montagefließbändern oder bei der Lagerhaltung beim Transport und der Handhabung von genannten KLTs, z.B. Transportbehältnissen, Paletten, verzinkten Transportblechen ("tinplates") oder bei in Warenhäusern oder Supermärkten eingesetzten Stapel-Rollenfahrzeugen, zur Anwendung kommen. Auch ist eine Anwendung bei der sogenannten "Just-in-time"-Fließbandbestückung in Logistikzentren, Güterbahnhöfen, Flughäfen, oder dergleichen möglich.

Das ebenfalls vorgeschlagene Computerprogramm ist eingerichtet, jeden Schritt des Verfahrens durchzuführen, insbesondere wenn es auf einem Rechengerät oder einem Steuergerät abläuft. Es ermöglicht die Implementierung des erfindungsgemäßen Verfahrens auf einem elektronischen Steuergerät, ohne an diesem bauliche Veränderungen vornehmen zu müssen. Hierzu ist der maschinenlesbare Datenträger vorgesehen, auf welchem das erfindungsgemäße Computerprogramm gespeichert ist. Durch Aufspielen des erfindungsgemäßen Computerprogramms auf ein elektronisches Steuergerät wird das erfindungsgemäße elektronische Steuergerät erhalten, welches eingerichtet ist, um ein als AGV ausgebildetes, bevorzugt mit Kleinladungsträgern (KLTs) ausgestattetes Transportfahrzeug bzw. einen aus wenigstens zwei AGVs gebildeten Routenzug mittels des erfindungsgemäßen Verfahrens zu steuern.

Weitere Vorteile und Ausgestaltungen des vorgeschlagenen Verfahrens und der Vorrichtung ergeben sich aus der Beschreibung und den beiliegenden Zeichnungen.

### Kurze Beschreibung der Zeichnungen

Fig. 1 zeigt ein Ausführungsbeispiel der erfindungsgemäßen Einrichtung zum Betreiben von autonom agierenden, mit Kleinladungsträgern (KLTs) beladbaren Transportfahrzeugen, und zwar am Beispiel einer/eines aus solchen Transportfahrzeugen gebildeten Fahrzeugflotte bzw. Routenzuges.
Fig. 2 zeigt ein Ausführungsbeispiel der erfindungsgemäßen mobilen Manipulatorvorrichtung.
Fig. 3 zeigt ein Ausführungsbeispiel des erfindungsgemäßen Verfahrens zum Betreiben einer in Fig. 1 gezeigten Einrichtung bzw. einer in Fig. 2 gezeigten Manipulatorvorrichtung.

### Beschreibung von Ausführungsbeispielen

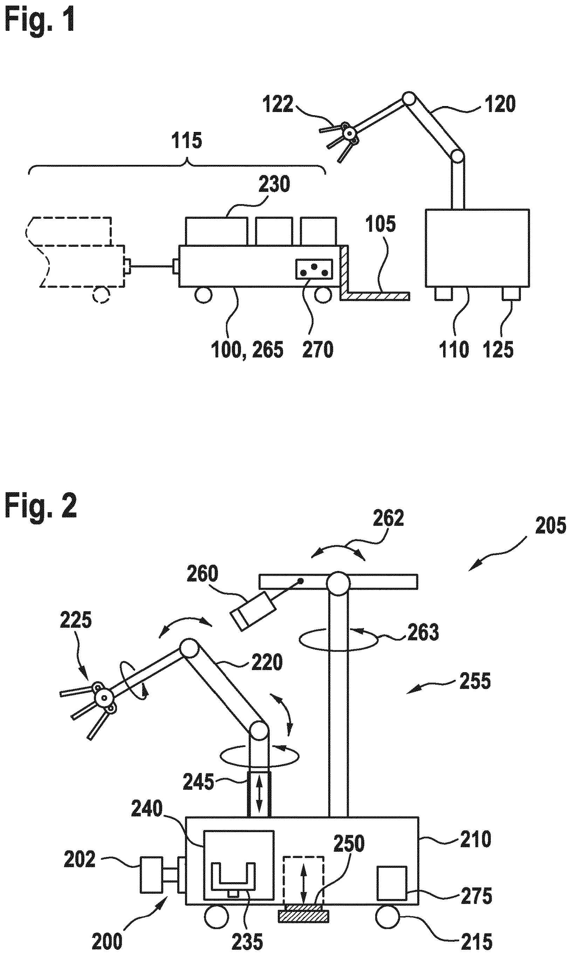

Die in Fig. 1 schematisch dargestellte Einrichtung umfasst ein als Pendelfahrzeug ausgebildetes und Teil eines Routenzugs 115 bildendes AGV 100 ("Automatic guided vehicle"), welches in dem vorliegenden Ausführungsbeispiel mittels eines Transportaufnehmers bzw. einer Transportstütze 105 unter eine mobile Manipulatorvorrichtung 110 fahren kann. Die Manipulatorvorrichtung 110 ist in diesem Ausführungsbeispiel auf fixen Stützen 125 gelagert. Dadurch kann das AGV 100 die Manipulatorvorrichtung 110 im "Huckepack"-Transport zu einem nicht gezeigten Einsatzort transportieren, und zwar vorliegend zu einem Fließband eines Montagewerks zur Herstellung von Kraftfahrzeugen. Die mobile Manipulatorvorrichtung 110 umfasst in dem gezeigten Ausführungsbeispiel einen austauschbaren, 6-achsigen Manipulator 120, z.B. mit einem gezeigten, vorliegend einem mit drei Greiffingern ausgestatteten mechanischen Greifer 122, der präzise Bewegungen des Manipulators 120 gleichzeitig in den drei Rotationsachsen und den drei Translationsachsen ermöglicht.

Es ist anzumerken, dass die an dem AGV 100 angeordnete Transportstütze 105 einem Ausführungsbeispiel einer in Fig. 2 gezeigten Kopplungsvorrichtung 200 zur lösbaren Verbindung des AGVs 100 mit der Manipulatorvorrichtung 110 entspricht.

Die in Fig. 2 schematisch dargestellte, mit einem in Fig. 1 gezeigten AGV 100 mittels einer Kopplungsvorrichtung 200 koppelbare, mobile Manipulatorvorrichtung 205 umfasst eine Plattform 210, welche entweder wie vorliegend mit beweglichen Laufrollen 215 oder mit (nicht gezeigten) fix angeordneten Standfüßen ausgebildet sein kann. Die Kopplungsvorrichtung 200 ist in dem vorliegenden Ausführungsbeispiel als Magnetkupplung ausgebildet, z.B. mit einem auf Seiten der Manipulatorvorrichtung angeordneten Elektromagnet 202 sowie mit einem auf Seiten des AGVs angeordneten (hier nicht gezeigten) vorliegend aus einem ferromagnetischen Werkstoff hergestellten Kupplungselement. Es ist anzumerken, dass die Kopplungsvorrichtung 200 auch mit alternativen Kopplungsmethoden, z.B. mit an sich bekannten steuerbaren mechanischen oder elektromechanischen Kupplungen, realisierbar ist. Dadurch wird ein automatisierbarer Betrieb der Kopplungsvorrichtung technisch einfach und kostengünstig ermöglicht.

Bei dem in Fig. 2 gezeigten Ausführungsbeispiel mit beweglichen Rollen 215 kann die Plattform 210 von einem hier nicht gezeigten AGV durch Zugkraft mittels der Kopplungsvorrichtung 200 oder durch Schiebekraft bewegt bzw. von dem AGV auf diese Weise mitgeführt werden. Im Falle von Standfüßen würde die Plattform eine Transportaufnahme oder dergleichen aufweisen, mittels der die Plattform 210 z.B. mittels einer in Fig. 1 gezeigten Transportstütze 105 von dem (in Fig. 2 nicht gezeigten) AGV sozusagen huckepack aufgeladen werden kann.

Die in Fig. 2 gezeigte Manipulatorvorrichtung 205 umfasst eine auf der Plattform 210 angeordnete Manipulatorkinematik 220 mit einem linear oder ähnlich einem Roboterarm eines Industrieroboters gehalterten Manipulator 225, und zwar in dem vorliegenden Ausführungsbeispiel einem dreigliedrigen Greifer. Der Greifer 225 ist automatisch auswechselbar und an einen jeweils zu handhabenden, vorliegend als Kleinladungs- bzw. Kleinlastträgers (KLT) ausgebildeten (in Fig. 1 gezeigten) Transportbehältnisses 230 bezüglich der Handhabung anpassbar ausgestaltet. Der gezeigte Greifer 225 kann von einer wenigstens zwei unterschiedliche Greifertypen 235 bevorratenden Station 240 ergriffen und an der Manipulatorkinematik 220 angebracht werden. Bei den jeweils bevorrateten Greifern 235 kann es sich um gabelförmige Greifer, speziell an die Form eines KLTs angepasste Greifer, Vakuumgreifer oder magnetische Greifer handeln.

Die Manipulatorvorrichtung 205 umfasst ferner eine Hubvorrichtung bzw. -anordnung 245, um den Manipulator 225, wie durch den Doppelpfeil angedeutet, an die jeweilige Höhe des Transportbehältnisses 230 anpassen bzw. anheben zu können. In dem vorliegenden Ausführungsbeispiel sind an der Unterseite der Plattform 210 zudem teleskopartig ausfahrbare Füße 250 angeordnet, mittels derer die Plattform 210 während des Betriebs bezüglich ihrer Standfestigkeit stabilisiert werden kann.

Darüber hinaus ist an der Manipulatorvorrichtung 205 ein 3D-Kamerasystem 255, z.B. mit einer an sich bekannten RGB-D-Kamera 260 zur Bereitstellung eines Farb- und Tiefeninformationen aufweisenden Bildes (z.B. das von den Firmen Microsoft und PrimeSense gemeinsam entwickelte "KINECT"-Kamerasystem), angeordnet. Die genaue Position der Kamera 255 kann dabei mittels der gezeigten beiden Rotationsachsen 262, 263 als von der jeweiligen Handhabungssituation abhängig vorgegeben werden. Die Kamera 255 ermöglicht die präzise räumliche Erfassung von zu handhabbaren, in Fig. 1 dargestellten Transportbehältnissen 230, z.B. von genannten KLTs bzw. von in solchen KLTs aufbewahrten Kleinteilen. Insbesondere kann sich die Manipulatorvorrichtung 205 mittels der Kamera 260 gegenüber dem AGV 100 bzw. dem entsprechenden Routenzug 115 präzise einmessen. Zur Einmessung der Manipulatorvorrichtung 205 gegenüber einem Routenzug 115 sind an jedem Routenzuganhänger, vorliegend am Beispiel des in Fig. 1 gezeigten Anhängers 265, wenigstens drei optische Referenzmarkierungen 270, z.B. drei im optischen Spektrum reflektierende Punkte, Streifen oder dergleichen, angebracht.

Die Verarbeitung der mittels des 3D-Kamerasystems 255 erfassten, visuellen Daten erfolgt in dem Ausführungsbeispiel durch Auslagern dieser Daten in eine externe "Cloud" sowie in an sich bekannter Weise durch entsprechendes "Cloud-Computing". Zu diesem Zweck umfasst die gezeigte Manipulatorvorrichtung eine herkömmliche WLAN-Kommunikationseinrichtung 275 zum drahtlosen Austauschen der genannten Daten. Diese Auslagerung der Daten hat den Vorteil, dass die Manipulatorvorrichtung keine erforderlichen Rechnerresourcen aufweisen muss, wodurch erhebliche Batterieenergie eingespart werden kann sowie die Baugröße und das Gewicht einer Manipulatorvorrichtung erheblich verringert werden können.

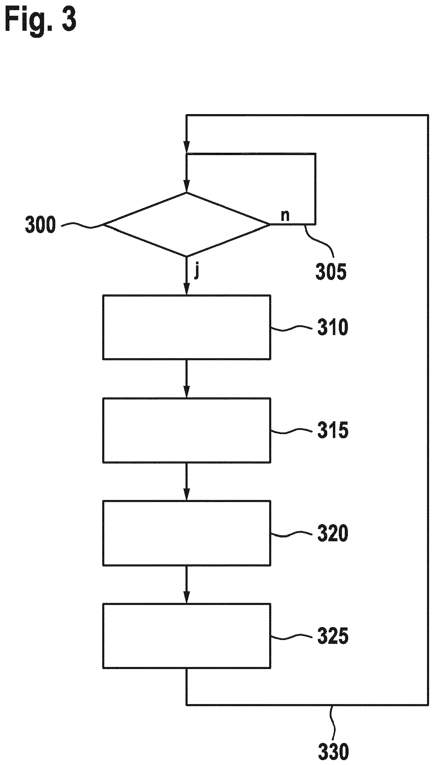

In Fig. 3 ist ein Ausführungsbeispiel des erfindungsgemäßen Verfahrens, insbesondere entsprechender Betriebsschritte zur automatisierten Koppelung einer Manipulatorvorrichtung gemäß Fig. 1 oder 2 mit einem AGV gemäß Fig. 1, anhand eines Flussdiagramms dargestellt. Mit der automatisierten Koppelung wird eine automatische Steuerung einer gesamten AGV-Flotte im Zusammenspiel mit einer hier betroffenen Manipulator-Flotte ermöglicht. Das Verfahren ermöglicht im Ergebnis die automatische Steuerung eines AGVs zum schnellen Beladen und Entladen von KLTs und/oder zum schnellen Ankoppeln und Abkoppeln von mobilen Manipulatorvorrichtungen.

Bei der in Fig. 3 dargestellten Routine erfolgt zunächst, wie durch die Programmschleife 305 angedeutet, eine fortwährende Erkennung 300 einer Anforderung zu einer genannten Koppelung. Bei erkannter Anforderung wird das genannte 3D-Kamerasystem 255 aktiviert, welches auf der Grundlage genannter optischer Markierungen 270 visuelle Daten erzeugt 310. In Schritt 315 werden diese visuellen Daten, z.B. mittels einer genannten WLAN-Verbindung 275, an einen externen Rechner bzw. externe Rechenmittel übermittelt. Bei diesen externen Rechenmitteln handelt es sich im vorliegenden Ausführungsbeispiel um eine genannte Cloud, in der mittels eines an sich bekannten, kollaborativen "Cloud-Computing"-Ansatzes die Auswertung der visuellen Daten durchgeführt wird.

Nach erfolgter Auswertung der visuellen Daten werden die Ergebnisse der Auswertung, d.h. entsprechende Positionsdaten, an die Manipulatorvorrichtung und das AGV zurück übermittelt 320. Auf der Grundlage dieser Positionsdaten erfolgt dann die Koppelung 325 der Manipulatorvorrichtung mit dem AGV. Anschließend wird wieder an den Anfang der Routine zurückgesprungen 330.

Das anhand von Fig. 3 beschriebene Verfahren ermöglicht eine automatisierte Steuerung einer hier betroffenen Einrichtung bzw. eines entsprechenden Routenzuges, wobei die Position eines an eine parkende Manipulatorvorrichtung heranfahrenden AGVs mittels der 3D-Positionserkennung 310 - 320 und der genannten optischen Markierungen 270 präzise erkannt wird.

Es ist ferner anzumerken, dass ein jeweiliges AGV eine mit passiven Rollen und mit teleskopartigen Füßen ausgestattete, mobile Manipulatorvorrichtung hinter sich herziehen und gleichzeitig ein oder mehrere KLTs transportieren kann. Alternativ kann vorgesehen sein, dass ein AGV eine mobile Manipulatorvorrichtung in der beschriebenen Weise (huckepack) auf sich auflädt und diese gleichzeitig mit einem oder mehreren KLTs transportiert. Auch kann vorgesehen sein, dass eine mobile Manipulatorvorrichtung, anstatt auf genannten Rollen, schienengebunden bewegt wird. Anstelle eines batteriebetriebenen AGVs können auch mit Kabeln elektrisch versorgte AGVs vorgesehen sein.

Zudem können mehrere Kameras zur 3D-Erfassung bzw. zur Berechnung der relativen Position eines AGVs in Bezug auf eine Manipulatorvorrichtung sowie der relativen Position eines Manipulators bzw. Greifers in Bezug auf in den KLTs angeordnete Bauteile angeordnet sein. Mittels solcher Kameras kann auch die relative Position von KLTs oder Bauteilen erfasst bzw. berechnet werden, welche z.B. auf an einem Arbeitsplatz vorgesehenen Rollenbändern angeordnet sind.

Das beschriebene Verfahren kann in Form eines Steuerprogramms für ein elektronisches Steuergerät zur Steuerung einer Brennkraftmaschine oder in Form einer oder mehrerer entsprechender elektronischer Steuereinheiten (ECUs) realisiert werden.

## Patentansprüche

1. Einrichtung mit wenigstens einem autonom agierenden, mit Transportgut (230) beladbaren Transportfahrzeug (100), das als Automated Guided Vehicle ausgebildet ist, und zumindest einer mobil ausgebildeten Manipulatorvorrichtung (205), die eine wenigstens einen Manipulator (225) aufweisende Manipulatorkinematik (220) umfasst, wobei das wenigstens eine Transportfahrzeug (100) eine Kopplungsvorrichtung (105, 200) aufweist, mittels der das Transportfahrzeug (100) mit der, Manipulatorvorrichtung (205) lösbar verbindbar ist,
**dadurch gekennzeichnet, dass** die Kopplungsvorrichtung (200) durch eine an dem wenigstens einen Transportfahrzeug (100) angeordnete Transportstütze (105) gebildet ist, und dass die Manipulatorvorrichtung eine Plattform (210) mit einer Transportaufnahme umfasst, die mittels der Transportstütze (105) aufgeladen werden kann.

2. Einrichtung nach Anspruch 1, **dadurch gekennzeichnet, dass** die Kopplungsvorrichtung (200) mit einer räumlichen Positionserkennung (255, 260, 270) zusammenwirkt.

3. Einrichtung nach Anspruch 2, **dadurch gekennzeichnet, dass** die räumliche Positionserkennung (255, 260, 270) wenigstens an dem Transportfahrzeug (100) und/oder an der Manipulatorvorrichtung (205) angeordnete Referenzmarkierungen (270) umfasst.

4. Einrichtung nach Anspruch 2 oder 3, **dadurch gekennzeichnet, dass** die räumliche Positionserkennung (255, 260, 270) wenigstens ein an der Manipulatorvorrichtung (205) und/oder an dem Transportfahrzeug (100) angeordnetes 3D-Kamerasystem oder eine Kamera (255, 260) umfasst.

5. Einrichtung nach Anspruch 4, **dadurch gekennzeichnet, dass** von dem 3D-Kamerasystem (255, 260) erfasste Daten mittels eines drahtlosen Kommunikationssystems (275) zu Zwecken der Datenverarbeitung an einen externen Rechner übermittelbar sind.

6. Einrichtung nach einem der vorstehenden Ansprüche, wobei das zumindest eine Transportfahrzeug (100) als ein als Pendelfahrzeug ausgebildetes und Teil eines Routenzugs bildendes Fahrzeug ausgebildet ist.

7. Einrichtung nach einem der vorstehenden Ansprüche, wobei die Manipulatorvorrichtung **dadurch gekennzeichnet ist, dass** wenigstens zwei Manipulatoren (235) mittels einer die wenigstens zwei unterschiedlichen Manipulatoren (235) bevorratenden Station (240) automatisch auswechselbar sind.

8. Einrichtung nach einem der vorstehenden Ansprüche, wobei die Manipulatorvorrichtung**dadurch gekennzeichnet ist, dass** ein 3D-Kamerasystem (255, 260) mit einer schwenkbaren Kamera (255) angeordnet ist, mittels der eine räumliche Erfassung von zu handhabbaren Objekten und/oder mittels der die Einmessung des Transportfahrzeuges (100) durchführbar ist.

9. Einrichtung nach Anspruch 8, **dadurch gekennzeichnet, dass** das 3D-Kamerasystem (255, 260) für die Einmessung mit an dem Transportfahrzeug (100) und/oder an der Manipulatorvorrichtung (205) angeordneten Referenzmarkierungen (270) zusammenwirkt.

10. Einrichtung nach Anspruch 8 oder 9, **dadurch gekennzeichnet, dass** von dem 3D-Kamerasystem (255, 260) erfasste Daten mittels eines an der Manipulatorvorrichtung (205) angeordneten, drahtlosen Kommunikationssystems (275) zu Zwecken der Datenverarbeitung an einen externen Rechner übermittelbar sind.

11. Einrichtung nach einem der vorstehenden Ansprüche, wobei die Manipulatorvorrichtung **dadurch gekennzeichnet ist, dass** eine Hubvorrichtung (245) angeordnet ist, mittels welcher der wenigstens eine Manipulator (225) an die jeweilige Höhe eines auf dem Transportfahrzeug (100) aufgeladenen Transportguts (230) anpassbar ist.

12. Einrichtung nach einem der vorstehenden Ansprüche, wobei die Manipulatorvorrichtung **dadurch gekennzeichnet ist, dass** an der Unterseite der Plattform (210) wenigstens ein ausfahrbarer Fuß (250) angeordnet ist.

13. Verfahren zum Betreiben einer Einrichtung mit wenigstens einem autonom agierenden, mit Transportgut (230) beladbaren Transportfahrzeug (100), welches mit einer Manipulatorvorrichtung (205) mit einer wenigstens einen Manipulator (225) aufweisenden Manipulatorkinematik (220) koppelbar ist, gemäß einem der vorhergehenden Ansprüche, wobei bei einer Koppelung der Manipulatorvorrichtung mit dem Transportfahrzeug (100) mittels der Kopplungsvorrichtung (105, 200) von einem 3D-Kamerasystem (255, 260) und anhand von an dem Transportfahrzeug (100) angeordneten Referenzmarkierungen (270) erfasste visuelle Daten zugrundegelegt werden (310), **dadurch gekennzeichnet, dass** zur Kopplung die Kopplungsvorrichtung (200) durch eine an dem wenigstens einen Transportfahrzeug (100) angeordnete Transportstütze (105) gebildet ist, und dass die Manipulatorvorrichtung eine Plattform (210) mit einer Transportaufnahme umfasst, die mittels der Transportstütze (105) aufgeladen werden kann.

14. Verfahren nach Anspruch 13, **dadurch gekennzeichnet, dass** die Datenverarbeitung der erfassten visuellen Daten an externe Rechenmittel ausgelagert wird (315).

15. Verfahren nach Anspruch 13 oder 14, **dadurch gekennzeichnet, dass** für ein gegebenes Anwendungsszenario zum Betreiben der Einrichtung die optimale Anzahl an Transportfahrzeugen (100) und/oder an mobilen Manipulatorvorrichtungen (205) auf der Grundlage von möglichen Bewegungspfaden der Transportfahrzeuge (100) im Vorfeld berechnet wird.

## Claims

1. Facility with at least one autonomously acting transport vehicle (100), which can be loaded with transport goods (230) and is designed as an automated guided vehicle, and at least one manipulator device (205) of a mobile design, which comprises a manipulator kinematic (220) having at least one manipulator (225), wherein the at least one transport vehicle (100) has a coupling device (105, 200), by means of which the transport vehicle (100) can be releasably connected to the manipulator device (205),
**characterized in that** the coupling device (200) is formed by a transport support (105) arranged on the at least one transport vehicle (100), and **in that** the manipulator device comprises a platform (210) with a transport holder, which can be loaded by means of the transport support (105).

2. Facility according to Claim 1, **characterized in that** the coupling device (200) interacts with a spatial position detection (255, 260, 270).

3. Facility according to Claim 2, **characterized in that** the spatial position detection (255, 260, 270) comprises reference markings (270) arranged at least on the transport vehicle (100) and/or on the manipulator device (205).

4. Facility according to Claim 2 or 3, **characterized in that** the spatial position detection (255, 260, 270) comprises at least one 3D camera system arranged on the manipulator device (205) and/or on the transport vehicle (100) or a camera (255, 260).

5. Facility according to Claim 4, **characterized in that** data recorded by the 3D camera system (255, 260) can be transmitted by means of a wireless communication system (275) to an external computer for purposes of data processing.

6. Facility according to one of the preceding claims, wherein the at least one transport vehicle (100) is designed as a vehicle which is designed as a shuttle vehicle and forms part of a tugger train.

7. Facility according to one of the preceding claims, wherein the manipulator device is **characterized in that** at least two manipulators (235) are automatically exchangeable by means of a station (240) stocking the at least two different manipulators (235).

8. Facility according to one of the preceding claims, wherein the manipulator device is **characterized in that** a 3D camera system (255, 260) with a pivotable camera (255) is arranged, by means of which a spatial recording of objects to be handled and/or by means of which the calibration of the transport vehicle (100) can be carried out.

9. Facility according to Claim 8, **characterized in that**, for the calibration, the 3D camera system (255, 260) interacts with reference markings (270) arranged on the transport vehicle (100) and/or on the manipulator device (205).

10. Facility according to Claim 8 or 9, **characterized in that** data recorded by the 3D camera system (255, 260) can be transmitted by means of a wireless communication system (275) arranged on the manipulator device (205) to an external computer for purposes of data processing.

11. Facility according to one of the preceding claims, wherein the manipulator device is **characterized in that** a lifting device (245) is arranged, by means of which the at least one manipulator (225) can be adapted to the respective height of a transport good (230) loaded on the transport vehicle (100).

12. Facility according to one of the preceding claims, wherein the manipulator device is **characterized in that** at least one extendable foot (250) is arranged on the underside of the platform (210).

13. Method for operating a facility with at least one autonomously acting transport vehicle (100) which can be loaded with transport goods (230) and can be coupled to a manipulator device (205) with a manipulator kinematic (220) having at least one manipulator (225), according to one of the preceding claims, wherein, when coupling the manipulator device to the transport vehicle (100) by means of the coupling device (105, 200), visual data recorded by a 3D camera system (255, 260) and using reference markings (270) arranged on the transport vehicle (100) can be taken as a basis (310), **characterized in that**, for the coupling, the coupling device (200) is formed by a transport support (105) arranged on the at least one transport vehicle (100), and **in that** the manipulator device comprises a platform (210) with a transport holder, which can be loaded by means of the transport support (105).

14. Method according to Claim 13, **characterized in that** the data processing of the recorded visual data is outsourced to an external computing means (315).

15. Method according to Claim 13 or 14, **characterized in that**, for a given application scenario for operating the facility, the optimum number of transport vehicles (100) and/or of mobile manipulator devices (205) is calculated in advance on the basis of possible movement paths of the transport vehicles (100).

## Revendications

1. Dispositif comprenant au moins un véhicule de transport (100) agissant de manière autonome, pouvant être chargé de marchandises à transporter (230), qui est réalisé sous la forme d'un véhicule à guidage automatique, et au moins un arrangement manipulateur (205) configuré mobile, qui comprend une cinématique de manipulateur (220) possédant au moins un manipulateur (225), l'au moins un véhicule de transport (100) possédant un arrangement d'accouplement (105, 200) au moyen duquel le véhicule de transport (100) peut être relié de manière amovible au dispositif manipulateur (205), **caractérisé en ce que** l'arrangement d'accouplement (200) est formé par un support de transport (105) disposé sur l'au moins un véhicule de transport (100), et **en ce que** l'arrangement manipulateur comporte une plate-forme (210) pourvue d'un logement de transport, qui peut être chargé au moyen du support de transport (105).

2. Dispositif selon la revendication 1, **caractérisé en ce que** l'arrangement d'accouplement (200) coopère avec une reconnaissance de position spatiale (255, 260, 270).

3. Dispositif selon la revendication 2, **caractérisé en ce que** la reconnaissance de position spatiale (255, 260, 270) comprend au moins des marquages de référence (270) disposés sur le véhicule de transport (100) et/ou sur l'arrangement manipulateur (205).

4. Dispositif selon la revendication 2 ou 3, **caractérisé en ce que** la reconnaissance de position spatiale (255, 260, 270) comprend au moins un système de caméra 3D ou une caméra (255, 260) disposé sur l'arrangement manipulateur (205) et/ou sur le véhicule de transport (100).

5. Dispositif selon la revendication 4, **caractérisé en ce que** les données acquises par le système de caméra 3D (255, 260) peuvent être transmises à un ordinateur externe au moyen d'un système de communication sans fil (275) à des fins de traitement de données.

6. Dispositif selon l'une des revendications précédentes, l'au moins un véhicule de transport (100) étant réalisé sous la forme d'un véhicule configuré comme une navette et formant une partie d'un train de remorques.

7. Dispositif selon l'une des revendications précédentes, l'arrangement manipulateur étant **caractérisé en ce qu'**au moins deux manipulateurs (235) sont interchangeables automatiquement au moyen d'une station (240) qui tient en réserve lesdits au moins deux manipulateurs (235) différents.

8. Dispositif selon l'une des revendications précédentes, l'arrangement manipulateur étant **caractérisé en ce qu'**un système de caméra 3D (255, 260) est disposé avec une caméra (255) pivotante, au moyen de laquelle peut être réalisée une détection spatiale d'objets à manipuler et/ou au moyen de laquelle peut être réalisé le mesurage du véhicule de transport (100).

9. Dispositif selon la revendication 8, **caractérisé en ce que** le système de caméra 3D (255, 260), pour le mesurage, coopère avec des marquages de référence (270) disposés sur le véhicule de transport (100) et/ou sur l'arrangement manipulateur (205).

10. Dispositif selon la revendication 8 ou 9, **caractérisé en ce que** les données acquises par le système de caméra 3D (255, 260) peuvent être transmises à un ordinateur externe à des fins de traitement de données au moyen d'un système de communication sans fil (275) disposé sur l'arrangement manipulateur (205).

11. Dispositif selon l'une des revendications précédentes, l'arrangement manipulateur étant **caractérisé en ce qu'**un arrangement de levage (245) est disposé, au moyen duquel l'au moins un manipulateur (225) peut être adapté à la hauteur respective de marchandises à transporter (230) chargées sur le véhicule de transport (100).

12. Dispositif selon l'une des revendications précédentes, l'arrangement manipulateur étant **caractérisé en ce qu'**au moins un pied (250) déployable est disposé sur le côté inférieur de la plateforme (210).

13. Procédé pour faire fonctionner un dispositif comprenant au moins un véhicule de transport (100) agissant de manière autonome, pouvant être chargé de marchandises à transporter (230), lequel peut être accouplé à un arrangement manipulateur (205) qui comprend une cinématique de manipulateur (220) possédant au moins un manipulateur (225), selon l'une des revendications précédentes, des données visuelles, acquises par un système de caméra 3D (255, 260) et à l'aide de repères de référence (270) disposés sur le véhicule de transport (100), étant prises comme base (310) lors d'un accouplement de l'arrangement manipulateur avec le véhicule de transport (100) au moyen de l'arrangement d'accouplement (105, 200), **caractérisé en ce que**, pour l'accouplement, l'arrangement d'accouplement (200) est formé par un support de transport (105) disposé sur l'au moins un véhicule de transport (100), et **en ce que** l'arrangement manipulateur comporte une plate-forme (210) pourvue d'un logement de transport, qui peut être chargé au moyen du support de transport (105).

14. Procédé selon la revendication 13, **caractérisé en ce que** le traitement de données des données visuelles acquises est externalisé (315) vers des moyens de calcul externes.

15. Procédé selon la revendication 13 ou 14, **caractérisé en ce que**, pour un scénario d'application donné en vue de faire fonctionner le dispositif, le nombre optimal de véhicules de transport (100) et/ou d'arrangements manipulateurs (205) mobiles est calculé à l'avance sur la base de trajectoires de déplacement possibles des véhicules de transport (100).
